# FASCICULE DE BREVET EUROPEEN

(11) **EP 2 422 668 B1**
(45) Date de publication et mention de la délivrance du brevet: **05.06.2013**
(21) Numéro de dépôt: 11306027.1
(22) Date de dépôt: 09.08.2011
(51) Int. Cl.: A47J 37/10

(54) **Ustensile culinaire de cuisson à fond induction et à évacuation des jus**
Kochgerät mit Induktionsboden und Flüssigkeitsableitung
Cooking utensil with induction bottom and juice draining

(30) Priorité: 27.08.2010 FR 1056829
(43) Date de publication de la demande: 29.02.2012
(73) Titulaire: SEB S.A., 69130 Ecully (FR)
(72) Inventeur: Cuillery, Pascal, 74210 Faverges (FR)
(74) Mandataire: Bourrières, Patrice

(56) Documents cités:
- EP-A1- 1 582 128
- DE-C- 733 585
- DE-U1- 29 605 888
- DE-U1- 29 804 196
- DE-U1- 29 922 255
- FR-A1- 2 919 484

## Description

La présente invention concerne le domaine technique des ustensiles culinaires de cuisson tel que les casseroles, les poêles ou les grils destinés notamment à être utilisés avec des systèmes de chauffage par induction. Dans une application préférée mais non exclusive, l'invention se rapporte aux poêle-grils destinées à la cuisson de la viande ou du poisson et adaptées pour être chauffées par induction.

Dans le domaine ci-dessous, il est connu que les meilleures performances de chauffage par induction sont obtenues avec des ustensiles culinaires réalisés en matériau ferromagnétique tel que la fonte d'acier. Toutefois, les ustensiles culinaires réalisés en fonte d'acier massive , s'ils permettent effectivement un bon chauffage par induction, présentent l'inconvénient d'être relativement lourds ce qui rend leur maniement difficile.

Afin de remédier à cet inconvénient il a été proposé des ustensiles culinaires dont une partie, à fond plat, destinée à recevoir les aliments à cuire est réalisée dans un matériau thermoconducteur léger tel que de la fonte d'aluminium. Afin d'augmenter les performances de chauffage par induction la partie de réception des aliments est associée à une partie en matériau ferromagnétique comme cela est par exemple décrit par la demande de brevet FR 2 919 484 ou encore WO 2006/056 632.

Les ustensiles culinaires ainsi réalisés présentent donc l'avantage d'être légers tout en possédant des caractéristiques magnétiques adaptées à un chauffage par induction. Toutefois, il est apparu à l'usage que la partie à fond plat de réception des aliments n'est pas adaptée à la cuisson ou plus particulièrement au grillage des viandes ou des poissons en raison notamment d'un chauffage trop important des jus ou exsudats de cuisson qui entraîne des dégagements de fumée voire une carbonisation partielle de ces derniers.

II est donc apparu le besoin d'un nouvel ustensile de cuisine qui, tout à la fois, soit léger et adapté pour un chauffage par induction et permette une cuisson de viande et de poisson sans risque de surchauffe des jus de cuisson.

Afin d'atteindre cet objectif l'invention concerne un ustensile culinaire de cuisson adapté pour être chauffé par induction, comprenant :
- un corps de cuisson qui est réalisé dans un matériau amagnétique thermoconducteur et dont une face supérieure est destinée à recevoir des aliments,
- un fond de chauffage qui est réalisé en matériau ferromagnétique et solidaire d'une face inférieure du corps de cuisson,
- et une surface d'appui (A) sur laquelle est destiné à reposer ledit ustensile culinaire en position normale d'utilisation,

Selon l'invention cet ustensile culinaire de cuisson est caractérisé en ce que :
- le corps de cuisson comprend au niveau de sa face supérieure, d'une part, des nervures qui s'étendent, en partie au moins, en saillie et qui définissent ensemble par leurs sommets une surface de support pour des aliments et, d'autre part, entre deux nervures adjacentes une surface inclinée en direction d'une zone de rétention de liquide,
- le fond de chauffage occupe une partie seulement de la face inférieure du corps de cuisson et n'est pas situé à l'aplomb de la zone de rétention de liquide.

L'association d'un corps de cuisson en matériau amagnétique et thermoconducteur et d'un fond de chauffage en matériau magnétique permet d'obtenir un ustensile plus léger qu'un ustensile qui serait réalisé de manière massive en matériau ferromagnétique. Par ailleurs, la mise en oeuvre d'un fond de chauffage en matériau ferromagnétique qui ne s'étend pas sur toute la face inférieure du corps de cuisson permet de définir une zone de chauffage des aliments sensiblement localisée au niveau de la région d'interface entre le fond de chauffage et le corps de cuisson. De plus, la présence des nervures et des surfaces inclinées permet, pendant la cuisson de viande par exemple, une évacuation des jus ou exsudats de cuisson vers la zone de rétention de liquide. Or, comme selon l'invention le fond de chauffage n'est pas situé à l'aplomb de la zone de rétention de liquide, cette dernière présente donc une température inférieure à celle de la zone de chauffage. Ainsi la combinaison de la conformation particulière de la surface de réception des aliments et de la faible extension du fond de chauffage, permet d'éviter une surchauffe des jus ou exsudats en raison de leur évacuation, au cours de la cuisson, vers la zone de rétention qui est plus froide que la zone de chauffage. L'ustensile culinaire selon l'invention permet donc de manière avantageuse d'éviter les habituels dégagements de fumée et d'odeurs désagréables résultants de la surchauffe des jus ou exsudats de cuisson.

Selon une forme de réalisation de l'invention visant à accentuer la différence de température entre la zone de chauffage et la zone de rétention, la surface d'appui s'étend en saillie de la face inférieure du corps de cuisson et le fond de chauffage s'inscrit dans un cylindre ayant pour base la surface d'appui. Ainsi, lorsque l'ustensile de cuisine selon l'invention est posé sur une table de cuisson à induction, la saillie de la surface d'appui par rapport au reste de la surface inférieure du corps de cuisson permet de délimiter, entre la table de cuisson et notamment la région du corps de cuisson correspondant à la zone de rétention, un espace de circulation d'air assurant une dissipation de la chaleur et donc un refroidissement de la zone de rétention.

Selon une caractéristique de cette forme de réalisation visant à accentuer l'effet de refroidissement, la hauteur de surface d'appui saillante, mesurée entre un plan tangent à la surface d'appui et une région adjacente de la face inférieure du corps de cuisson, est supérieure à 1 mm et, de préférence mais non nécessairement, supérieure à 3 mm.

Selon une variante de réalisation de l'invention visant également à accentuer la différence de température entre la zone de chauffage et la zone de rétention, la dimension la plus grande du fond de chauffage est inférieure à 80% de la dimension la plus grande du corps de cuisson, ces dimensions étant mesurées parallèlement à un plan défini par la surface d'appui. Toujours dans le même sens, la dimension la plus grande du fond de chauffage pourra être choisie de manière à être inférieure à 60% de la dimension la plus grande du corps de cuisson, ces dimensions étant mesurées parallèlement à un plan défini par la surface d'appui.

Toujours dans le même but et selon une autre caractéristique de l'invention, la distance, mesurée parallèlement à un plan défini par la surface d'appui, entre un bord périphérique du fond de chauffage et la partie la plus proche d'un bord périphérique de la zone de rétention est supérieure à 10 mm et de préférence supérieure à 15 mm.

Selon l'invention, différentes configurations peuvent être envisagées pour les nervures ainsi, elles peuvent être disposées en étoile en partant du centre de la face supérieure du corps de cuisson, elles peuvent également être orientées parallèlement les unes aux autres. Quelle que soit l'orientation des nervures, elles sont de préférence en partie au moins situées à l'aplomb du fond de chauffage.

Selon une caractéristique de l'invention visant à faciliter l'évacuation des jus et exsudats pendant la cuisson, la surface de support est sensiblement parallèle à la surface d'appui.

Selon l'invention, l'ustensile culinaire et notamment le corps de cuisson peut se présenter sous différentes formes telles que notamment une forme à symétrie de révolution ronde ou circulaire ou tout autre forme adaptée. Selon une forme de réalisation de l'invention, le corps de cuisson présente en vue de dessus une forme générale rectangulaire ou oblongue.

Dans le cadre de cette forme de réalisation, la zone de rétention peut être située le long d'un petit côté du corps de cuisson. Bien entendu, au lieu d'être localisée le long d'un petit côté du corps de cuisson, la zone de rétention pourrait également s'étendre à la périphérie de ce dernier par exemple le long de deux côtés opposés ou encore le long des quatre côtés. Dans le cas d'un corps de cuisson présentant une forme générale ronde, la zone de rétention peut également s'étendre sur toute la périphérie du corps de cuisson mais également être limitée à une partie seulement de celle-ci. Quelle que soit la localisation adoptée pour la ou les zones de rétention, les surfaces inclinées entre les nervures seront orientées pour assurer un écoulement des liquides en direction de la ou des zones de rétention.

Selon une caractéristique de l'invention, le corps de cuisson comprend un rebord périphérique qui confère à la face supérieure une forme générale concave.

Selon une autre caractéristique de l'invention, le fond de chauffage présente en vue de dessous une forme générale circulaire.

Selon encore une autre caractéristique de l'invention, le fond de chauffage est visible au niveau de la surface d'appui.

Selon une caractéristique de l'invention visant à limiter l'emploi de corps gras pour limiter l'adhérence des aliments pendant la cuisson, la face supérieure du corps de cuisson est recouverte, en partie au moins, d'un revêtement anti-adhérent.

Selon l'invention le corps de cuisson et le fond de chauffage peuvent être réalisé en tout matériau approprié. Ainsi, le corps de cuisson peut être réalisé en fonte d'aluminium tandis que le fond de chauffage peut être en acier inoxydable par exemple en acier inoxydable de nuance AISI 430.

Selon une caractéristique de l'invention, l'ustensile culinaire de cuisson comprend au moins une poignée solidaire du corps de cuisson. Une telle poignée peut être adaptée de manière amovible sur le corps de cuisson ou au contraire fixée de manière permanente sur ce dernier.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

Par ailleurs, diverses autres caractéristiques de l'invention ressortent de la description annexée effectuée en référence aux dessins qui illustrent une forme non limitative de réalisation d'un ustensile culinaire de cuisson conforme à l'invention.
- La figure 1 est une perspective schématique en vue de trois quarts de dessus d'un ustensile culinaire de cuisson selon l'invention formant une poêle-gril.
- La figure 2 est une perspective schématique en vue de trois quarts de dessous de l'ustensile culinaire de cuisson illustré à la figure 1.
- La figure 3 est une coupe selon le plan III de la figure 1.
- La figure 4 est une coupe selon la ligne IV-IV de la figure 3.
- La figure 5 est une élévation partielle, en vue de dessous, de l'ustensile de cuisson illustrée aux figures 1 à 4.

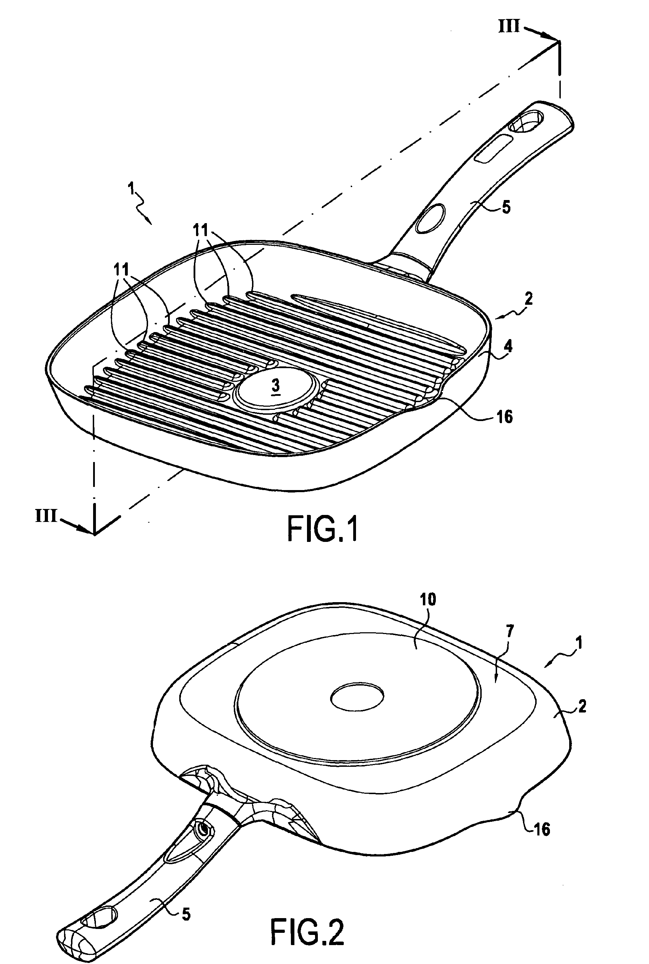

Dans une forme, préférée mais non exclusive, de réalisation d'un ustensile culinaire de cuisson selon l'invention, ce dernier constitue, comme le montrent les figures 1 et 2, une poêle-gril particulièrement adaptée à la cuisson de viande ou de poisson sur une table ou plaque de cuisson à induction.

L'ustensile culinaire de cuisson, désigné dans son ensemble par la référence 1, comprend un corps de cuisson 2 qui, selon l'exemple illustré, présente une forme générale concave et plus particulièrement une forme de calotte à base rectangulaire ou oblongue. Ainsi, le corps de cuisson 2 possède une face supérieure 3 qui est destinée à recevoir des aliments à cuire et qui est entourée par un rebord périphérique 4. Le corps de cuisson 2 comprend au niveau du rebord 4, au centre d'un grand côté, une poignée allongée 5 fixée au moyen d'une vis 6 sur un plot faisant partie intégrante du corps de cuisson 2. Bien entendu, les moyens de préhension du corps de cuisson 2, constitués par la poignée 5, pourraient être réalisés de toute autre manière appropriée telle que sous la forme de deux petites poignées situées sur les petits côtés du corps de cuisson 2 ou encore sous la forme d'une ou plusieurs poignées amovibles.

Le corps de cuisson 2 est réalisé dans un matériau thermoconducteur amagnétique tel que de la fonte d'aluminium qui permet d'obtenir un corps de cuisson plus léger que s'il était réalisé dans un matériau thermoconducteur ferromagnétique comme de l'acier inoxydable ou de la fonte d'acier.

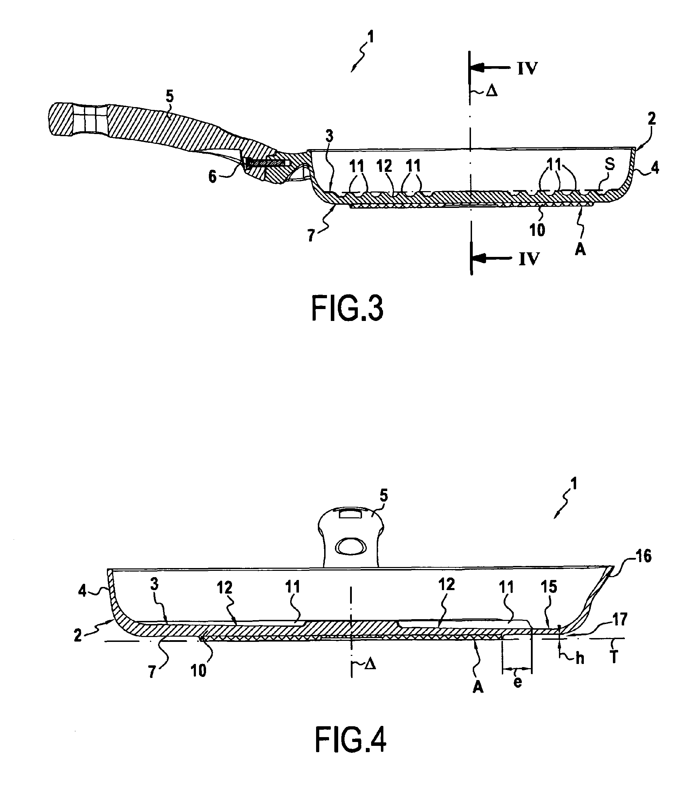

Afin de permettre un chauffage efficace du corps de cuisson au moyen d'une table de cuisson à induction, le corps de cuisson 2 est pourvu, au niveau d'une face inférieure 7 opposée à la face 3 de réception des aliments, d'un fond de chauffage 10 réalisé dans un matériau ferromagnétique comme par exemple un acier inoxydable de qualité AISI 430. Le fond de chauffage 10 est parfaitement solidaire du corps de cuisson 2 et se trouve, selon l'exemple illustré et comme cela ressort des figures 3 et 4, en partie au moins encastré dans le corps de cuisson 2 tout en restant visible. L'assemblage du corps de cuisson 2 et du fond de chauffage 10 peut être réalisé de toute manière appropriée garantissant une bonne conduction thermique entre ces deux éléments ainsi qu'une résistance de cet assemblage compatible avec de fréquentes opérations de lavage et des chocs thermiques répétés résultant d'une utilisation normale de l'ustensile culinaire de cuisson selon l'invention. La liaison entre le corps de cuisson 2 et le fond de chauffage 10 pourra par exemple être obtenue par surmoulage du corps de cuisson 2 sur le fond de chauffage 10 qui présentera alors des conformations de réception ou d'accrochage du matériau constitutif du corps de cuisson 2.

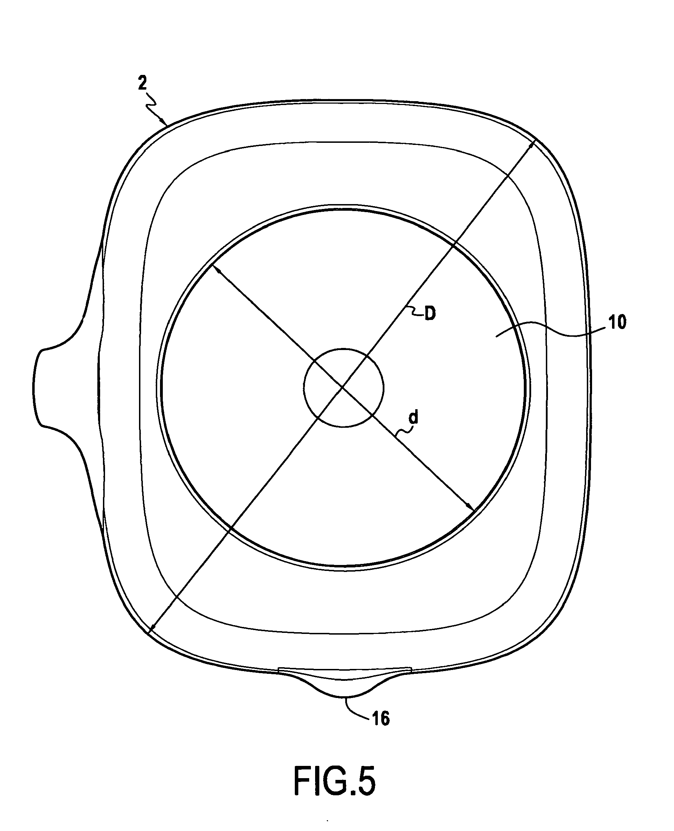

Selon l'exemple illustré, le corps de cuisson 2 est surmoulé sur le fond de chauffage 10 de manière que ce dernier reste visible par le dessous de l'ustensile culinaire 1 tout en étant invisible par le dessus dudit ustensile culinaire. Dans le cas présent, le fond de chauffage 10 présente la forme générale d'un cylindre de révolution de faible épaisseur dont l'axe Δ est confondu avec l'axe médian de la surface supérieure 3 du corps de cuisson 2. Ainsi, le fond de chauffage 10 présente en vue de dessous comme le montre la figure 5 une forme générale circulaire.

Afin de permettre la cuisson d'aliments tels que de la viande ou du poisson en évitant qu'ils ne baignent dans leur jus ou exsudats, le corps de cuisson 2 présente une série de nervures 11 qui s'étendent en saillie de la face supérieure 3 de réception des aliments. Selon l'exemple illustré, les nervures 11 sont sensiblement parallèles les unes aux autres et aux grands côtés du corps de cuisson 2. Les nervures 11 s'étendent en partie au moins à l'aplomb du fond de chauffage 10 voire au-delà de ce dernier, certaines des nervures 11 s'étendant sur toute la longueur du corps de cuisson 2. Les sommets des nervures 11 définissent ensemble une surface, ici un plan, de support S des aliments représentés en traits mixtes à la figure 3. La surface de support S est sensiblement parallèle à la surface, ici un plan, d'appui A de l'ustensile 1 qui est formée par la face inférieure du fond de chauffage 10 et qui est destinée à venir en appui sur une table de cuisson à induction ou analogue. Ainsi, selon l'exemple illustré, lorsque l'ustensile culinaire selon l'invention est posé sur une table de cuisson sensiblement horizontale, la surface de support S forme un plan sensiblement horizontal.

De manière à permettre une évacuation des exsudats pendant la cuisson et éviter leur accumulation sous l'aliment en train de cuire, chaque surface 12 située entre deux nervures adjacentes 11 est inclinée en direction d'une zone de rétention de liquide 15 qui selon l'exemple illustré est située le long d'un petit côté du corps de cuisson 2. Ainsi, pendant la cuisson d'une viande, les exsudats et les jus s'écouleront et s'accumuleront dans la zone de rétention 15 évitant à la viande de « bouillir » dans ces derniers. Selon une forme de réalisation préférée mais non exclusive de l'invention, la face supérieure 3 du corps de cuisson 2 sera recouverte d'un revêtement anti-adhérent qui contribuera à faciliter l'écoulement et permettra une cuisson des aliments sans recourir à une quantité importante de corps gras.

Afin de faciliter la récupération des jus de cuisson, le rebord périphérique 4 du corps de cuisson 2 comprend un bec verseur 16 au niveau d'une région centrale du petit côté adjacent à la zone de rétention 15.

De plus, l'ustensile culinaire selon l'invention est conçu de manière à éviter que les exsudats et jus de cuisson accumulés dans la zone de rétention 15 ne subissent un chauffage trop important qui entraînerait leur dégradation et un dégagement de fumée et d'odeurs désagréables. À cet effet, le fond de chauffage 10 est réalisé et disposé de manière à n'occuper qu'une partie seulement de la face inférieure du corps de cuisson 2 et à ne pas être situé à l'aplomb de la zone de rétention de liquide 15 comme le montre la figure 4. Ainsi, la zone de rétention 15 n'est pas directement chauffée par le fond de chauffage 10. Selon l'exemple illustré, la zone de rétention 15 se trouve décentrée par rapport au corps de cuisson 2.

Dans le cas présent et comme le montre la figure 5, le fond de chauffage 10 est, d'une part, centré par rapport à la face de réception des aliments 3 du corps de cuisson 2 et, d'autre part, réalisé de manière que sa dimension la plus grande d, dans le cas présent son diamètre, est inférieure ou égale à 80% de la dimension D la plus grande du corps de cuisson 2, ici sa diagonale, ces deux dimensions étant mesurées parallèlement au plan de la surface d'appui A. De manière préférée mais non exclusive la plus grande dimension d du fond de chauffage 10 sera inférieure à 60 % de la dimension la plus grande D du corps de cuisson 2 et, par exemple, comprise entre 45 % et 60 % de la plus grande dimension D du corps de cuisson 2.

Toujours dans le but d'éviter une surchauffe de la zone de rétention 15, la distance e, entre un bord périphérique du fond de chauffage 10 et la partie la plus proche d'un bord périphérique de la zone de rétention 15, est de préférence supérieure à 10 mm et, de manière plus particulièrement préférée, supérieure à 15 mm. Cette distance e est mesurée parallèlement au plan défini par la surface d'appui A.

Selon l'exemple illustré, le corps de cuisson 2 est réalisé de manière que la surface d'appui A, définie dans le cas présent par la face inférieure plane du fond de chauffage 10, s'étend en saillie de la face inférieure du corps de cuisson. Ainsi, lorsque l'ustensile de cuisson 1 repose sur une table de cuisson T, il existe, entre la table T et la face inférieure du corps de cuisson 2, un espace 17 de circulation d'air qui permet d'accentuer la différence de température entre la zone de rétention 15 et la partie du corps de cuisson 2 située à l'aplomb du fond de chauffage 10. La hauteur h de la surface d'appui, saillante par rapport à une région adjacente de la face inférieure du corps de cuisson, sera de préférence mais non exclusivement supérieure à 1 mm et, de manière plus particulièrement préférée, supérieure à 3 mm.

Selon l'exemple illustré et décrit précédemment, le corps de cuisson 2 présente une forme générale rectangulaire. Toutefois, le corps de cuisson 2 pourrait également présenter une tout autre forme telle que par exemple une forme générale circulaire ou ovale. De la même manière, le fond de chauffage 10 pourrait présenter une autre forme générale que cylindrique à base circulaire et par exemple une forme cylindrique à base rectangulaire ou ovale ou encore tout autre forme complexe appropriée.

Bien entendu, diverses autres modifications peuvent être apportées à l'invention dans le cadre des revendications annexées.

## Revendications

1. Ustensile culinaire de cuisson adapté pour être chauffé par induction, comprenant :
- un corps de cuisson (2) qui est réalisé dans un matériau amagnétique thermoconducteur et dont une face supérieure (3) est destinée à recevoir des aliments,
- un fond de chauffage (10) qui est réalisé en matériau ferromagnétique et solidaire d'une face inférieure (7) du corps de cuisson (2),
- et une surface d'appui (A) sur laquelle est destiné à reposer ledit ustensile culinaire
en position normale d'utilisation
**caractérisé en ce que** :
- le corps de cuisson (2) comprend au niveau de sa face supérieure (3), d'une part, des nervures (11) qui s'étendent, en partie au moins, en saillie et qui définissent ensemble par leurs sommets une surface de support (S) pour des aliments et, d'autre part, entre deux nervures adjacentes (11), une surface (12) inclinée en direction d'une zone de rétention de liquide (15),
- le fond de chauffage (10) occupe une partie seulement de la face inférieure du corps de cuisson (2) et n'est pas situé à l'aplomb de la zone de rétention de liquide (15),
- La liaison entre le corps de cuisson 2 et le fond de chauffage 10 est obtenue par surmoulage du corps de cuisson 2 sur le fond de chauffage 10.

2. Ustensile culinaire de cuisson selon la revendication 1, **caractérisé en ce que** la surface d'appui s'étend en saillie de la face inférieure du corps de cuisson (2) et **en ce que** le fond de chauffage (10) s'inscrit dans un cylindre ayant pour base la surface d'appui (A).

3. Ustensile culinaire de cuisson selon la revendication 2, **caractérisé en ce que** la hauteur de surface d'appui saillante, mesurée entre un plan tangent à la surface d'appui (A) et une région adjacente de la face inférieure (7) du corps de cuisson (2), est supérieure à 1 mm et de préférence supérieure à 3 mm.

4. Ustensile culinaire de cuisson selon l'une des revendications précédentes, **caractérisé en ce que** la surface de support (S) est sensiblement parallèle à la surface d'appui (A).

5. Ustensile culinaire de cuisson selon l'une des revendications précédentes, **caractérisé en ce que** la dimension (d) la plus grande du fond de chauffage (10) est inférieure ou égale à 80% de la dimension (D) la plus grande du corps de cuisson (2), ces dimensions étant mesurées parallèlement à un plan défini par la surface d'appui.

6. Ustensile culinaire de cuisson selon l'une des revendications précédentes, **caractérisé en ce que** la dimension (d) la plus grande du fond de chauffage (10) est inférieure ou égale à 60% de la dimension (D) la plus grande du corps de cuisson (2), ces dimensions étant mesurées parallèlement à un plan défini par la surface d'appui.

7. Ustensile culinaire de cuisson selon l'une des revendications précédentes, **caractérisé en ce que** la distance (e), mesurée parallèlement à un plan défini par la surface d'appui (A), entre un bord périphérique du fond de chauffage (10) et la partie la plus proche d'un bord périphérique de la zone de rétention (15) est supérieure à 10 mm et de préférence supérieure à 15 mm.

8. Ustensile culinaire selon l'une des revendications précédentes, **caractérisé en ce que** le corps de cuisson (2) présente en vue de dessus une forme générale rectangulaire ou oblongue.

9. Ustensile culinaire de cuisson selon la revendication 8, **caractérisé en ce que** la zone de rétention (15) est située le long d'un petit côté du corps de cuisson (2).

10. Ustensile culinaire de cuisson selon l'une des revendications précédentes, **caractérisé en ce que** le corps de cuisson (2) comprend un rebord périphérique (4) qui confère à la face supérieure (3) une forme générale concave.

11. Ustensile culinaire de cuisson selon l'une des revendications précédentes, **caractérisé en ce que** le fond de chauffage (10) présente en vue de dessous une forme générale circulaire.

12. Ustensile culinaire de cuisson selon l'une des revendications précédentes, **caractérisé en ce que** la face supérieure (3) du corps de cuisson (2) est recouverte en partie au moins d'un revêtement anti-adhérent.

13. Ustensile culinaire de cuisson selon l'une des revendications précédentes, **caractérisé en ce que** le corps de cuisson (2) est réalisé en fonte d'aluminium et le fond de chauffage (10) en acier inoxydable.

14. Ustensile culinaire de cuisson selon l'une des revendications précédentes, **caractérisé en ce que** les nervures (11) sont en partie au moins situées à l'aplomb du fond de chauffage (10).

## Patentansprüche

1. Kochgeschirr, das angepasst ist, um mittels Induktion erhitzt zu werden, umfassend:
- einen Garkörper (2), der aus einem amagnetischen, wärmeleitfähigen Material hergestellt ist und dessen Oberseite (3) für die Aufnahme von Lebensmitteln bestimmt ist,
- einen Heizboden (10), der aus einem ferromagnetischen Material hergestellt ist und fest mit einer Unterseite (7) des Garkörpers (2) verbunden ist,
- und eine Auflagefläche (A), auf der das Kochgeschirr in normaler Gebrauchsposition aufliegen soll,
**dadurch gekennzeichnet, dass**:
- der Garkörper (2) auf Höhe seiner Oberseite (3) einerseits Rippen (11), die sich wenigstens teilweise vorragend erstrecken und zusammen durch ihre höchsten Punkte eine Tragfläche (S) für Lebensmittel definieren, und andererseits zwischen zwei nebeneinander liegenden Rippen (11) eine Fläche (12) umfasst, die in Richtung eines Flüssigkeitsauffangbereiches (15) geneigt ist,
- der Heizboden (10) nur einen Teil der Unterseite des Garkörpers (2) einnimmt und sich nicht lotrecht zum Flüssigkeitsauffangbereich (15) befindet,
- die Verbindung zwischen dem Garkörper (2) und dem Heizboden (10) durch Umformung des Garkörpers (2) auf dem Heizboden (10) erhalten wird.

2. Kochgeschirr nach Anspruch 1, **dadurch gekennzeichnet, dass** sich die Auflagefläche vorragend von der Unterseite des Garkörpers (2) erstreckt und dadurch, dass der Heizboden (10) einen Zylinder beschreibt, dessen Basis die Auflagefläche (A) ist.

3. Kochgeschirr nach Anspruch 2, **dadurch gekennzeichnet, dass** die Höhe der vorragenden Auflagefläche, die zwischen einer Ebene, die an der Auflagefläche (A) anliegt, und einem an die Unterseite (7) des Garkörpers (2) angrenzenden Bereich gemessen wird, größer ist als 1 mm und vorzugsweise größer als 3 mm.

4. Kochgeschirr nach einem der vorhergehenden Ansprüche, **dadurch gekennzeichnet, dass** die Tragfläche (S) im Wesentlichen parallel zur Auflagefläche (A) verläuft.

5. Kochgeschirr nach einem der vorhergehenden Ansprüche, **dadurch gekennzeichnet, dass** die größte Abmessung (d) des Heizbodens (10) kleiner oder gleich 80% der größten Abmessung (D) des Garkörpers (2) ist, wobei diese Abmessungen parallel zu einer Ebene gemessen werden, die von der Auflagefläche definiert wird.

6. Kochgeschirr nach einem der vorhergehenden Ansprüche, **dadurch gekennzeichnet, dass** die größte Abmessung (d) des Heizbodens (10) kleiner oder gleich 60% der größten Abmessung (D) des Garkörpers (2) ist, wobei diese Abmessungen parallel zu einer Ebene gemessen werden, die von der Auflagefläche definiert wird.

7. Kochgeschirr nach einem der vorhergehenden Ansprüche, **dadurch gekennzeichnet, dass** der Abstand (e), der parallel zu einer Ebene, die von der Auflagefläche (A) definiert wird, zwischen einem umlaufenden Rand des Heizbodens (10) und dem Bereich gemessen wird, der einem umlaufenden Rand des Auffangbereiches (15) am nächsten liegt, größer als 10 mm und vorzugsweise größer als 15 mm ist.

8. Kochgeschirr nach einem der vorhergehenden Ansprüche, **dadurch gekennzeichnet, dass** der Garkörper (2) in der Draufsicht eine im Allgemeinen rechteckige oder längliche Form aufweist.

9. Kochgeschirr nach Anspruch 8, **dadurch gekennzeichnet, dass** sich der Auffangbereich (15) entlang einer kurzen Seite des Garkörpers (2) befindet.

10. Kochgeschirr nach einem der vorhergehenden Ansprüche, **dadurch gekennzeichnet, dass** der Garkörper (2) einen umlaufenden Rand (4) umfasst, der der Oberseite (3) eine im Allgemeinen konkave Form verleiht.

11. Kochgeschirr nach einem der vorhergehenden Ansprüche, **dadurch gekennzeichnet, dass** der Heizboden (10) in der Untersicht eine im Allgemeinen kreisrunde Form aufweist.

12. Kochgeschirr nach einem der vorhergehenden Ansprüche, **dadurch gekennzeichnet, dass** die Oberseite (3) des Garkörpers (2) wenigstens teilweise mit einer Antihaftbeschichtung bedeckt ist.

13. Kochgeschirr nach einem der vorhergehenden Ansprüche, **dadurch gekennzeichnet, dass** der Garkörper (2) aus Aluminiumguss und der Heizboden (10) aus rostfreiem Stahl hergestellt ist.

14. Kochgeschirr nach einem der vorhergehenden Ansprüche, **dadurch gekennzeichnet, dass** sich die Rippen (11) wenigstens teilweise lotrecht zum Heizboden (10) befinden.

## Claims

1. A cooking utensil designed to be heated by induction, comprising:
- a cooking body (2) which is made of a thermally conductive non-magnetic material and the upper face (3) of which is designed to receive food,
- a heating base (10) which is made of ferromagnetic material and integrated to a lower face (7) of the cooking body (2),
- a bearing surface (A) on which said cooking utensil is intended to rest in the normal position of use
**characterised in that**:
- the cooking body (2) includes on its upper face (3) ribs (11) that extend at least partially in a protruding manner and whose tops together define a support surface (S) for food as well as a surface (12) between two adjacent ribs (11), which is inclined towards a liquid retention zone (15),
- the heating base (10) occupies only one part of the lower face of the cooking body (2) and is not located directly below the liquid retention zone (15),
- The connection between the cooking body (2) and the heating base (10) is obtained by overmoulding the cooking body (2) on the heating base (10).

2. A cooking utensil according to claim 1, **characterised in that** the bearing surface extends in a protruding manner from the lower face of the cooking body (2) and **in that** the heating base (10) is inscribed within a cylinder having the bearing surface (A) as its base.

3. A cooking utensil according to claim 2, **characterised in that** the protruding bearing surface height, measured between a plane tangent to the bearing surface (A) and an adjacent region of the lower face (7) of the cooking body (2), is greater than 1 mm, preferably, greater than 3 mm.

4. A cooking utensil according to one of the preceding claims, **characterised in that** the support surface (S) is substantially parallel to the bearing surface (A).

5. A cooking utensil according to one of the preceding claims, **characterised in that** the largest dimension (d) of the heating base (10) is less than or equal to 80% of the largest dimension (D) of the cooking body (2), these dimensions being measured parallel to a plane defined by the bearing surface.

6. A cooking utensil according to one of the preceding claims, **characterised in that** the largest dimension (d) of the heating base (10) is less than or equal to 60% of the largest dimension (D) of the cooking body (2), these dimensions being measured parallel to a plane defined by the bearing surface.

7. A cooking utensil according to one of the preceding claims, **characterised in that** the distance (e), measured parallel to a plane defined by the bearing surface (A), between a peripheral edge of the heating base (10) and the nearest part of a peripheral edge of the retention zone (15) is greater than 10 mm, preferably greater than 15 mm.

8. A cooking utensil according to one of the preceding claims, **characterised in that** the cooking body (2) has a generally rectangular or oblong shape from a top view.

9. A cooking utensil according to claim 8, **characterised in that** the retention zone (15) is located along a smaller side of the cooking body (2).

10. A cooking utensil according to one of the preceding claims, **characterised in that** the cooking body (2) has a peripheral side (4) which gives the upper face (3) a generally concave shape.

11. A cooking utensil according to one of the preceding claims, **characterised in that** the heating base (10) has a generally circular shape from a bottom view.

12. A cooking utensil according to one of the preceding claims, **characterised in that** the upper face (3) of the cooking body (2) is covered at least partially with a non-stick coating.

13. A cooking utensil according to one of the preceding claims, **characterised in that** the cooking body (2) is made of cast aluminium and the heating base (10) of stainless steel.

14. A cooking utensil according to one of the preceding claims, **characterised in that** the ribs (11) are at least partially located directly above the heating base (10).
